# EUROPEAN PATENT APPLICATION

(11) **EP 2 219 257 A1**
(43) Date of publication of application: **18.08.2010**
(21) Application number: 09152924.8
(22) Date of filing: 16.02.2009
(51) Int. Cl.: H01M 8/10

(54) **Fuel cell comprising an ion-conductive membrane**

(71) Applicant: NEDSTACK HOLDING B.V., 6827 AV Arnhem (NL)
(72) Inventor: Middelman, Erik, 6815 EV Arnhem (NL)
(74) Representative: Hesselink, Dinah Elisabeth

(57) **Abstract**

A fuel cell which encompasses a anode flow field and a cathode flow field, said flow fields being separated by a membrane, the membrane being ion-conductive and electrically insulating, the membrane having a first surface in the cathode flow field and a second surface in the anode flow field, the first surface being provided with a first electrode, and the second surface being provided with a second electrode, the first and second electrodes being electroconductively connected to each other via an electric circuit, wherein the membrane comprising at least two ion-conductive layers, wherein at least one of said ion-conductive layers is electrically insulating and at least one of said ion-conductive layers is electrically conductive.

## Description

The invention relates to a fuel cell comprising an ion-conductive membrane. In particular, the invention relates to proton exchange membrane or polymer electrolyte (PEM) fuel cells including direct liquid fuel cells (DLFCs) that operate on hydrocarbon fuels. These hydrocarbon fuels can be in liquid form, in gaseous form, or in water-diluted liquid or gaseous form. An example of such a DLFC is a direct-methanol fuel cell (DMFC). Examples of hydrocarbon fuels are methanol, ethanol, glycol, and dimethylether.

The chemical reaction of a fuel cell requires the presence of an electrolyte in the form of a membrane, electrodes and catalysts. A PEM fuel cell uses hydrogen or hydrogen-rich gases as the fuel while a DLFC uses a liquid fuel like a solution of methanol, ethanol, or glycol, or hydrocarbons in the gaseous phase. Hydrogen, hydrogencontaining gases, and hydrocarbons are hereinafter collectively referred to as fuel or fuels. A DLFC also contains a PEM interposed between the two electrodes. PEM fuel cells and DLFCs are hereinafter collectively referred to as fuel cells.
In fuel cells, an anode and a cathode are separated by a polymer membrane that is selectively permeable to hydrogen ions. Fuel, e.g. hydrogen or a hydrocarbon fuel, is supplied at the anode. The hydrogen ions generated at the anode side of the fuel cell pass through the membrane to the cathode side of the fuel cell. The electrons generated at the anode side travel to the cathode side of the fuel cell by passing through an external circuit that connects the anode and cathode. Air or an alternative oxygen source is present at the cathode where oxygen reduction occurs. Fuel cells are an appropriate choice for an electrochemical power supply cell considering their low operating temperature of 0-200°C, more specifically, depending on the cell type, 60-95 °C, long service life, limited size and potentially low costs.

Although the performance of fuel cells is reasonably acceptable, there is still room for further improvement. In particular, there is a trend towards decreasing the thickness of the hydrogen ion permeable membrane in order to minimize the internal resistance of the fuel cell and material costs. However, the decreasing thickness of the membrane increases the probability of transfer of the reactants, in particular of molecular hydrogen or methanol, through the membrane. The driving force for this transfer is the concentration difference between the anode side and cathode side of the fuel cell. A consequence of the transfer of fuel through the membrane is the decrease of the conversion efficiency of the fuel cell resulting from a decrease of the fuel cell voltage and the loss of fuel.

It is an object of the present invention to provide a fuel cell comprising a membrane which is less susceptible to the transfer of fuel, without the ion permeability of the membrane being detrimentally affected.
It is a further object of the invention to provide a fuel cell, in particular a PEM fuel cell, comprising an ion-conductive membrane, which fuel cell has an increased efficiency and improved durability.

These objects are accomplished by the provision of the fuel cell according to the invention. The fuel cell according to the invention encompasses a anode flow field and a cathode flow field, said flow fields being separated by a membrane, the membrane being ion-conductive, in particular proton-conductive, and electrically insulating, the membrane having a first surface in the cathode flow field and a second surface in the anode flow field, the first surface being provided with a first electrode, and the second surface being provided with a second electrode, the first and second electrodes being electro-conductively connected to each other via an electric circuit, wherein the membrane comprises at least two ion-conductive layers, wherein at least one of said ion-conductive layers is electrically insulating and at least one of said ion-conductive layers is electrically conductive.

It has appealed that the combination of an electrically insulating layer and an electrically conductive layer provides a membrane which has a decreased permeability for molecular hydrogen without affecting the permeability for protons. This result in a fuel cell with improved efficiency.

The invention will be described in more detail below, with references to the attached drawings, which schematically show preferred embodiments according to the invention. It will be understood that the invention is not in any way restricted to these specific and preferred embodiments.
In the drawings:
Fig. 1 shows a proton exchange membrane fuel cell.
Figs. 2A and 2B respectively show an ion-conductive membrane and a membrane electrode assembly for use in a fuel cell according to a first embodiment of the invention.
Figs. 3A and 3B respectively show an ion-conductive membrane and a membrane electrode assembly for use in a fuel cell according to a second embodiment of the invention.
Fig. 4 shows a membrane electrode assembly for use in a fuel cell according to a further embodiment of the invention.
Fig 5 shows a membrane electrode assembly for use in a fuel cell according to a further embodiment of the invention.

In the fuel cell according to the invention, an ion-conductive membrane is used which comprises at least two ion-conductive layers, wherein at least one of said ion-conductive layers is electrically insulating and at least one of said ion-conductive layers is electrically conductive. The layer which is electrically insulating is electrically insulating in the direction perpendicular to the membrane plane.
The membrane used in the fuel cell of the present invention has a decreased permeability for molecular hydrogen. Without wishing to be bound by theory it is believed that this is caused by the following mechanism. Within the electrically conductive layer of the membrane, molecular hydrogen reacts to form protons and electrons. The protons are transported through the ion-conductive membrane. The electrons are transported through the conductive layer back to an electrode. Consequently, the local hydrogen concentration in the electrically conductive layer is considerably reduced at particular locations by these reactions. These locations constitute drains for further molecular hydrogen that may react as well.
This results, in short, in intercepting molecular hydrogen that is permeating through the membrane and causing it to contribute to the efficiency of the fuel cell. When the fuel cell is in use, the electrically conductive layer acts as a barrier against transfer of molecular hydrogen through the membrane.
It is believed that for other fuels like methanol the conductive layer will act as a barrier layer via an analogous mechanism. In the following, the present invention will be elucidated with reference to molecular hydrogen as fuel. However, the skilled person will understand that this is applicable to other fuels, in particular to methanol, in an analogous manner.

Within the context of the present specification, an ion-conductive layer is a layer with an ion conductivity, in particular a proton conductivity, of at least 0.01 S/cm, at 65°C and 100% RH. An electrically insulating layer is a layer with an electric break down strength of at least 10 kV/mm. An electrically conductive layer is a layer with an electric breakdown strength of less than 10 kV/mm. As will be evident to the skilled person, the electrically insulating layer should be such that, under conditions of use of the fuel cell, no breakdown occurs, and the electric current leak through the electrically insulating layer is less than 5%, typically less than 1% of the average current during operation. The typical current density in a PEM fuel cell is in the range of 5.000 to 20.000 A/m². he maximum electric current through the electrically insulating layer generally is 1000 A/m², more in particular 500 A/m², still more in partitular 100 A/m².

Materials suitable for manufacturing ion-conductive electrically insulating membranes are known in the art, and may be inorganic or organic in nature, with organic materials generally being plastics. Suitable membranes encompass ceramic membranes, such as perovskite membranes like for example KH(PO₃H)-SiO₂ composites. Suitable plastic membranes encompass sulphonated polystyrene, sulphonated polyphenylene ethers, for example sulphonated polyphenyl ethers, or PPEs, and polyphenylene oxides, or PPOs. Copolymers of ethoensulfonic acid, for example with styrene, vinyl chloride, and ethene may also be used, as may be sulphated polymers (sulpate esters) of for example, polyvinyl alcohol, or more in general sulphated hydroxy-functional polymers, sulphonated aromatic polyamides and polyimides, and, more in general, sulphonic acid functional condensation polymers. When used in the presence of water, examples of suitable polymers include fluorinated sulfonic acid polymer (PFSA), sulfonated polyethersulfone (SPEWS) polymers, sulfonated poly(ether ether ketone) (SPEEK) polymer, sulphonated polyether keton (SPEK), sulfonated poly(ether ketone ketone) (SPEKK), and sulfonated poly(arylene ether sulfone) (SPSU).
If so desired, the electrically insulating layer contains spacer particles, that is, particles which help to ensure that the layer has a predetermined thickness. This is important because while the electrically insulating layer may be quite thin, for example in the region of 0.1-10 microns. It should not contain sections which are too thin, as this will affect the breakdown strength of the layer. The use of spacer particles, of a size of, between 0.1 and 10 microns, will ensure that the electrically insulating layer is locally not thinner than the stipulated value. Fibrous spacer particles are preferred because they also add to the mechanical properties of the membrane.

To improve properties like mechanical strength and durability, the membrane may be reinforced with fibres, porous films or layers, e.g., of polymer like Solupor, or reinforcing particles, such as silica. If so desired the reinforcing material or spacer material, if used, may be pretreated to ensure improved compatibility with the membrane layers.

The permeability for molecular hydrogen of the various layers of the membrane should be as low as possible. In general this will mean that the membrane layers will be non-porous. Should pores be present in one or more membrane layers, the pore structure should be such that the permeability for molecular hydrogen is not substantially affected. This will generally mean that the pore structure is discontinuous, and that any pores have a diameter which is significantly than the thickness of the membrane layer.

In one embodiment, the ion-conductive and electrically conducting layer of the membrane comprises an ion-conductive matrix with an electrically conductive filler dispersed therein.
The ion-conductive matrix is for example a polymer matrix. Suitable polymers are those discussed above for the insulating layer.
The electrically conductive filler comprises a particulate conductive material, such as carbon. In the present specification the word particulate also encompasses the use of fibrous materials. The amount of filler should be selected such that the filler forms a conductive network of particles within the polymer matrix. If the amount of filler is too low, a network of particles will not be formed and the electrical conductivity of the layer is detrimentally affected. On the other hand, if the amount of filler is too high, the amount of ion-conductive matrix is too low, and the ion conductivity of the layer is affected. Further, if the amount of filler is too high, the amount of matrix may become so low that it becomes difficult to obtain a continuous membrane layer. This may lead to an increased permeability for molecular hydrogen. The appropriate amount of filler depends on the nature of the matrix, on the conductivity of the filler, and also on its particle size and shape. Suitable fillers include carbon materials such as carbon nanotubes and carbon particles. As an example of a suitable carbon material KetjenBlack EC 600 of Akzo Nobel, or Vulcan of Cabot may be mentioned. It is within the scope of the skilled person to prepare ion-conductive electrically conductive layers on the basis of the above.

The reaction in the ion-conductive electrically conduc-tive layer from molecular hydrogen into protons and electrons is catalysed by catalytically active sites present in the layer. These sites may form automatically, e.g., by migration of some catalyst, such as platinum, from the electrodes into the electrically conductive layer. However, they may also be formed on purpose, by incorporating a catalytically active material into the membrane during manufacture. In one embodiment this can be done by applying a catalytically active material, for example platinum onto the filler material.
In one embodiment of the present invention the concentration of catalytic sites in the electrically conductive layer is inhomogeneous over the cross-section of the layer, with the concentration being lower at the electrode-side of the layer and higher at the side of the layer which is adjacent to the electrically insulating layer. In this embodiment the reaction of the molecular hydrogen to form protons take place further away from the electrode. This reduces the formation of a driving force for molecular hydrogen into the membrane. In one embodiment, the electrically conductive layer is built up from two or more layers, wherein the outer layer, that is, the layer on the electrode side of the membrane has a content of catalytically active material which is lower than that of the layer(s) further removed from the surface, with the content of catalytic material increasing with increasing distance from the electrode.

In one other embodiment of the present invention the concentration of catalytic sites in the electrically conductive layer is also inhomogeneous over the cross-section of the layer, with the concentration being higher at the electrode-side of the layer and lower at the side of the layer which is adjacent to the electrically insulating layer. In this embodiment the reaction of the molecular hydrogen to form protons take place close to the electrode. In one embodiment, the electrically conductive layer is built up from two or more layers, wherein the outer layer, that is, the layer on the electrode side of the membrane has a content of catalytically active material which is higher than that of the layer(s) further removed from the surface, with the content of catalytic material decreasing with increasing distance from the electrode.

The total membrane generally has a thickness of 10 to 1000 microns, more in particular of 25 to 500 microns, still more in particular 50 to 500 microns. The conductive layers generally make up between 1 and 99% of the total thickness of the membrane. More specifically, it may be preferred for the electrically conductive layers to make up a substantial part of the membrane. The electrically insulating layer may be relatively thin, as long as dielectric breakdown strength is higher than the maximum cell voltage. Accordingly, in one embodiment the conductive layers make up between 30 and 90% of the total thickness of the membrane, more in particular between 50 and 80%.

A further embodiment of the present invention is described below.
In conventional PEM fuel cells, the membrane of the fuel cells is attacked by peroxide and oxygen radicals that are formed within the electrodes. This attack results in a degradation of the quality of the membrane and accordingly reduces the service life of the membrane. Therefore, there is need for a membrane which has a reduced formation of peroxide and oxygen radicals, and resulting improved durability.
In one embodiment of the present invention this need is solved by a fuel cell wherein an ion-conductive electrically conductive membrane layer is present on the cathode side of the membrane. This layer contributes to preventing molecular oxygen from diffusing from the cathode side towards the anode side of the fuel cell by the reaction O₂ + 4H⁺ + 4e⁻ → 2H₂O. The water that is formed dissolves within the membrane and accounts for self-moisturizing of the membrane.
In a particularly advantageous embodiment of the invention, a membrane is used which comprises an electrically insulating, ion-conductive layer interposed between a first electrically conductive ion-conductive layer and a second electrically conductive ion-conductive layer.
In use in a fuel cell in this embodiment, the first electrically conductive ion-conductive layer acts as an effective barrier against transfer of molecular hydrogen from the anode towards the cathode, whereas the second electrically conductive ion-conductive layer acts as a barrier against transfer of molecular oxygen from the cathode towards the anode.

Again, the presence of catalytically active positions in the electrically conductive ion-conductive layer of the membrane assists the reaction, and in one embodiment of the invention these sites are present in this layer. For particulars on the nature of the electrically conductive ion-conductive layer, reference is made to what has been stated above. Again;, it may be preferred for the concentration of catalytically active material to be lower at the electrode side of the electrically conductive layer, and higher at the side of the electrically insulating layer.
In one embodiment of the present invention a membrane is used which comprises, starting from the side of the anode, a first electrically conductive, ion-conductive layer, a second electrically conductive, ion-conductive layer with a concentration of catalytically active material which is higher than the concentration of catalytically active material in the first electrically conductive, ion-conductive layer, an electrically insulating ion-conductive layer, a third electrically conductive, ion-conductive layer, and a fourth electrically conductive, ion-conductive layer, which has a concentration of catalytically active material which is lower than the concentration of catalytically active material in the third electrically conductive, ion-conductive layer.

In one embodiment, the ion-conductive layer at the cathode side of the membrane has a concentration of catalytically active material which is higher than the concentration of catalytically active material in the electrically conductive layer at the anode side of the membrane. In general, the concentration of catalytically active material in the layer at the anode side is between 0.01 and 60 wt.%, calculated on the weight of the carbon support on which it is deposited. In general, the concentration of catalytically active material in the layer at the kathode side is between 0.01 and 60 wt.%, calculated on the weight of the carbon support on which it is deposited

In a further embodiment of the present invention, the ion-conductive electrically insulating layer is profiled, for example in the form of a regular or irregular wave or saw pattern, or in any other non-flat profile. The crux of this embodiment is that the transport of protons through the membrane is improved by ensuring that the direction of the electrical field over the electrically insulating layer is not parallel and opposite to the transport direction of the protons over the entire surface of the electrically insulating layer.
In known PEM fuel cell membranes, the electric field works against the positively charged protons moving from anode to cathode, and thus adds to the proton resistance. Ideally the electric field is perpendicular to the transport direction of the protons, however this is in practice difficult to realise. Use of a non-flat profile like a wave form can substantially reduce this type of resistance.

In one embodiment of the present invention the membrane in the fuel cell comprises two electrically insulating layers, with a conductive layer in between, the conductive layer being provided with a catalytically active material. In this embodiment oxygen, which passes through the electrically insulating layer will react in the conductive layer between the insulating layers with hydrogen to form water. While the presence of the conductive layer does not contribute to the efficiency of the fuel cell (no current is generated), it does contribute to the removal of oxygen and peroxy-radicals, which increases cell life. In this embodiment, the membrane will comprise, sequentially, starting from an electrode, an electrically conductive layer, an electrically insulating layer, an electrically conductive layer, an electrically insulating layer, and, preferably, a further electrically conductive layer. All electrically conductive layers are at least over part of their cross-section catalytically active.

Membranes used in the fuel cell according to the invention may be manufactured by methods known in the art for the manufacture of multilayer films. Examples of suitable methods include co-extrusion, solution casting, slot dye coating, slide coating, etc. For example, a membrane may be manufactured by sequentially casting polymer solutions with appropriate compositions onto a surface, for example a film or a roll, and allowing the solutions to solidify before applying the next solution.

In the fuel cell according to the invention, the membrane discussed above will be in the form of a membrane electrode assembly (MEA) comprising a membrane as discussed above which has a first surface that is provided with a first electrode, and a second surface that is provided with a second electrode. In use in a fuel cell, the first electrode will be in contact with fuel and will serve as anode. The second electrode will be in contact with oxygen, and will serve as cathode.
The electrodes have an electric conductivity sufficient to have acceptable electric ohmic losses. To this end electrodes may be used with sufficiently high specific conductivity, and sufficient thickness.
Optionally, an anode can be used comprising an electroconductive catalytic material in combination with an electro-conductive catalytically inactive material. The anode is conductive for protons. The catalytic material will ensure the conversion of molecular hydrogen into protons and electrons, and the electro-conductive material ensures transport of the electrons. An a cathode can be used comprising an electroconductive catalytic material in combination with an electroconductive catalytically inactive material. The catalytic material will ensure the conversion of molecular oxygen with protons and electrons into water, and the electroconductive material en-sures transport of the electrons. The cathode is conductive for protons.
In another embodiment, if so desired, the in plane electro-conductivity of one or both electrodes can be further improved by providing a highly conductive current distribution material or grid on top of the electrode.
The first electrode is an electrically conductive layer comprising a material which is able to catalyse the conversion of hydrogen into protons and electrons. Suitable catalysts are all known hydrogen ionising catalysts like platinum, palladium and other platinum group metals and altoys thereof. In one embodiment, the electrode comprises a thin film of palladium or palladium alloy. The first electrode will generally have a thickness in the range of 0.2 to 10 microns, more in particular in the range of 1 to 5 microns.
The second electrode is an electrically conductive layer comprising a material which is able to catalyse the reaction of protons with oxygen and electrons to form water. Suitable catalysts are known in the art and comprise, for example, platinum, palladium, other platinum group metals, some palladium alloys, but also many other materials which have shown catalytic acivity in this reaction. Preferably, the second electrode is an electrically conductive layer that is permeable for molecular hydrogen and protons, e.g., by virtue of having a porous structure. The second electrode generally will have a thickness in the range of 0.5 to 100 microns, more in particular in the range of 1 to 10 microns, typically in the range of 2-5 microns.

In one embodiment, an electrically conductive layer is present on the side of the surface of the membrane in the anode flow field and an electrically insulating layer is present on the side of the membrane present in the cathode flow field.
In another embodiment, an electrically insulating layer is present on the side of the surface of the membrane in the cathode flow field and an electrically conductive layer is present on the side of the membrane present in the anode flow field.
In a further embodiment, an electrically conductive layer is present on the side of the surface of the membrane in the cathode flow field and an electrically conductive layer is present on the side of the membrane present in the anode flow field, with an insulating layer being interposed between the two electrically conductive layers.

The invention will be further illustrated with reference to the attached drawings, which schematically show preferred embodiments according to the invention. It will be understood that the invention is not in any way restricted to these specific and preferred embodiments.

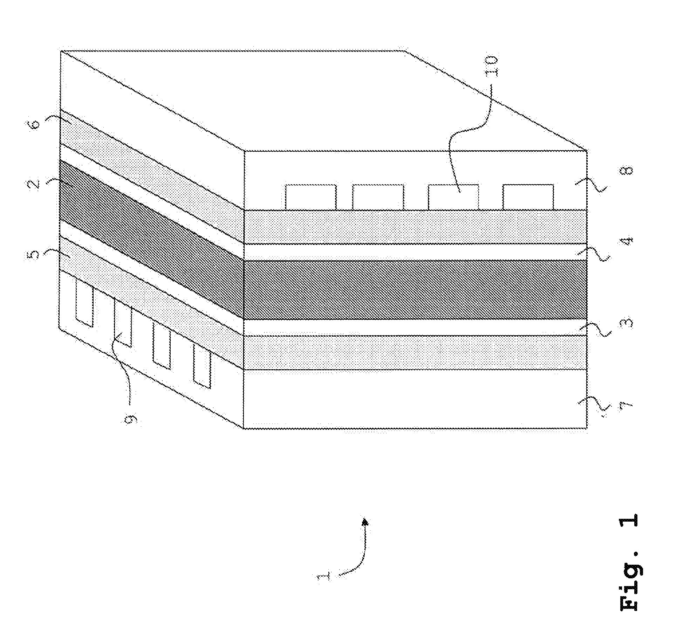

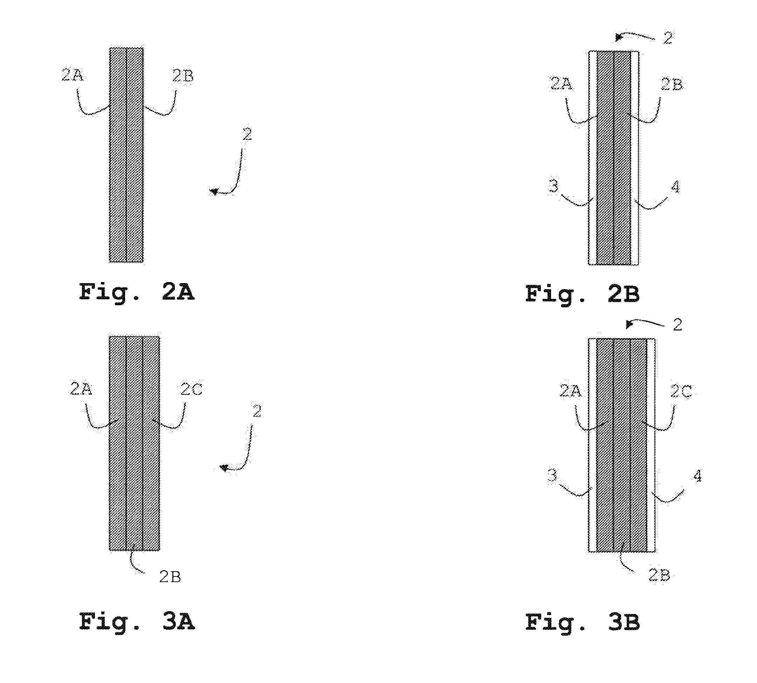

In Figure 1, a proton exchange membrane (PEM) fuel cell 1 comprises a central polymer electrolyte membrane 2 with two primary surfaces, two separate electrode catalyst layers 3,4, e.g. of platinum, each with an inner layer attached to one of the two primary surfaces, respectively referred to as the anode and cathode. Two backing layers 5,6, typically a carbon paper or cloth, are attached to the outer surfaces of the electrode catalyst layers 3,4 and two respective flow field/current collector graphite plates 7,8 are pressed against the outer surfaces of the backing layers 5,6.
Inside the anode current collector/flow field plate 7 are built-in channels 9 for hydrogen fuel transport. Similarly, the cathode current collector/flow field 8 has flow channels 10 to admit air or oxygen and to exit water and un-used air. The polymer electrolyte membrane 2, the anode catalyst layer 3 and the cathode catalyst layer 4 together constitute a membrane electrode assembly (MEA).
The PEM fuel cell 1 generally operates at temperatures in the range of 0-200°C, in particular in the range of 60-95 °C and power densities in the range of 0.1 to 1.5 W/cm², in particular in the range of 0.2-1.0 W/cm². The electrical efficiency of PEM fuel cells is in the range of 45-65% independent of the operating point of the cell. A single PEM fuel cell may for example provide for a voltage in the range of 0.5-0.8 V. A stack of these PEM fuel cells 1 may be used to obtain the desired voltage for power supply.
In an embodiment of the invention, the membrane 2 comprises at least two ion-conductive layers 2A and 2B. The ion-conductive layer 2A is electrically conductive, whereas the other layer 2B electrically insulating. Figs. 2A and 2B respectively show such a membrane 2 and a MEA comprising this multi-layer membrane disposed between the anode catalyst layer 3 and the cathode catalyst layer 4. Preferably, both membrane layers are substantially to the molecular hydrogen fuel gas and the oxygen gas.
In a further embodiment of the invention, a membrane 2 is provided comprising an electrically insulating, ion-conductive layer 2B interposed between a first electrically conductive ion-conductive layer 2A and a second electrically conductive ion-conductive layer 2C. Such a membrane 2 and a membrane electrode assembly comprising such a membrane are shown in Figs. 3A and 3B. The composition of the first and second electrically conductive ion-conductive layers 2A, 2C may be the same of different.

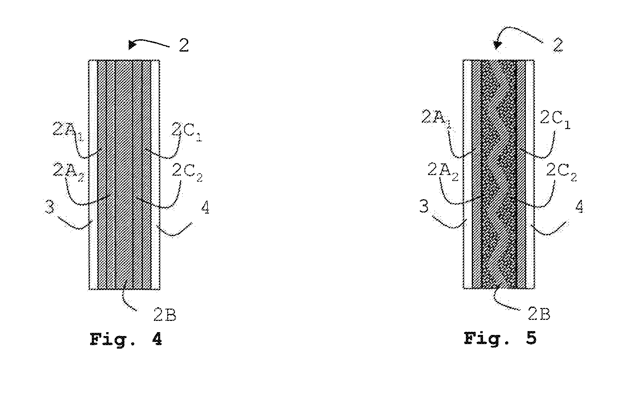

In Fig 4, the electrically conductive layers 2A, 2C are made up of electrically conductive sublayers 2A1, 2A2 and 2C1, 2C2 respectively. The concentration of catalytically active material in the outer layers 2A1 and 2C1 is lower than the concentration of catalytically active material in the inner layers 2A2 and 2C2.
In Fig 5, the electrically conductive layers 2A, 2C are made up of electrically conductive sublayers 2A1, 2A2 and 2C1, 2C2 respectively. The concentration of catalytically active material in the outer layers 2A1 and 2C1 is lower than the concentration of catalytically active material in the inner layers 2A2 and 2C2. The electrically insulating layer 2B has a wave pattern. The crux of this embodiment is that the transport of protons through the membrane is improved by ensuring that the direction of the electrical field over the electrically insulating layer is not parallel and opposite to the transport direction of the protons over the entire surface of the electrically insulating layer.

The present invention also pertains to a fuel cell stack comprising at least one fuel cell as described above.

The following gives an of various embodiments of the present invention, without the invention being limited thereto or thereby.

### EXAMPLE 1

The three layer membrane 2 of Figs. 3A and 3B may be manufactured from three solutions/dispersions.
The dispersion for the electrically conductive ion-conductive layer 2A comprises KetjenBlack EC 600 provided with 1 weight percent platinum particles having a size in the range of 1-10 nm, preferably 2-5 nm to obtain catalytically active positions in the electrically conductive layer 2A to assist the ionisation of the molecular hydrogen. The dispersion further comprises a polymer, for example, Nafion^{®} EW 1100, and a solvent.
The dispersion for the electrically insulating ion-conductive layer 2B comprises Aerosil with an average particle size of 20 nm as non-conductive filler. The dispersion further comprises a polymer, for example, Nafion^{®} EW 1100, and a solvent.
The dispersion for the electrically conductive ion-conductive layer 2C again comprises KetjenBlack EC 600 provided with 1 weight percent platinum particles having a size in the range of 1-10 nm, preferably 2-5 nm to obtain catalytically active positions in the electrically conductive layer 2A to assist the reaction of oxygen radicals with protons to form water. The dispersion further comprises a polymer, for example. Nafion^{®} EW 1100, and a solvent..
Each dispersion is homogenized using a high shear high rotational speed Ultra Turax mixing device.
A slide-coat machine is provided with a Mylar type polyester carrier film with a thickness of 125 micron. Three supply vessels containing the above identified dispersions are connected to the slide-coat head of the machines and one or more dosing pumps control the supply ratio of the diverse dispersions to the Mylar film. The machine is set to provide, for example, 1 metre of membrane per minute. The slide-coat head manufactures the three-layer membrane 2 in one operation. Subsequently, the membrane 2 is fed to a heating device to evaporate the solvents, taking care that the temperature is not so high that the properties of the membrane are affected, typically staying below the boiling temperature of the solvent.
The membrane produced according to example 1 can be processed into a CCM (Catalyst Coated Membrane) or MEA (Membrane Electrode Assembly) in manners known in the art for the manufacture of membrane-electrode assemblies. One known method is the application on both sides of the membrane of electrodes using the decal or transfer coating method. In this method a transfer film is coated with the electrodes. On one side of the membrane the anode on transfer film is pressed, and on the other side the transfer film with cathode coating is pressed. After pressing, heating, and cooling, the transfer films are removed. The remaining product is called a CCM, Catalyst Coated Membrane or MEA, Membrane Electrode Assembly. If to this CCM or MEA a GDL (Gas Diffusion Layer) is added on both sides, and this so called 5 layer MEA is clamped between two flow field plates, a single fuel cell is formed. A pile of these fuel cells forms a fuel cell stack.

### EXAMPLE 2

A 5 layer membrane of Figure 4 may be manufactured from four solutions/dispersions.
A first dispersion, for the layers 2A1 and 2C1, contains a mixture of conductive carbon black particles, Nation 1100 dispersion and solvent. This solution does not contain catalytically active material.
A second dispersion, for the electrically conductive ion-conductive layer 2A2 which will be used on the hydrogen-side of the membrane, comprises KetjenBlack EC 600 provided with 1 weight percent platinum particles having a size in the range of 1-10 nm, preferably 2-5 rim to obtain catalytically active positions in the electrically conductive layer 2A to assist the ionisation of the molecular hydrogen. The dispersion comprises a polymer, for example, Nafion^{®} EW 1100, and a solvent.
A third dispersion, for the electrically conductive ion-conductive layer 2A2 which will be used on the oxygen-side of the membrane, comprises KetjenBlack EC 600 provided with 5 weight percent platinum particles having a size in the range of 1-10 nm, preferably 2-5 no to obtain catalytically active positions in the electrically conductive layer 2A to assist the ionisation of the molecular oxygen. The dispersion further comprises a polymer, for example, Nafion^{®} EW 1100, and a solvent.
A fourth dispersion, for the electrically insulating ion-conductive layer comprises a non conductive filler material like a PTFE dispersion with an average particle size of 500 nm. The PTFE particles operate a spacer material to avoid local thin spots in the electrically insulating layer. The dispersion further contains a polymer, e.g., Nafion^{®} EW 1100 dispersion and a solvent.
The four dispersions can be used to manufacture a membrane, MEA, and fuel cell analogous to what has been described in Example 1 above.

## Claims

1. A fuel cell which encompasses a anode flow field and a cathode flow field, said flow fields being separated by a membrane, the membrane being ion-conductive and electrically insulating, the membrane having a first surface in the cathode flow field and a second surface in the anode flow field, the first surface being provided with a first electrode, and the second surface being provided with a second electrode, the first and second electrodes being electro-conductively connected to each other via an electric circuit, wherein the membrane comprising at least two ion-conductive layers, wherein at least one of said ion-conductive layers is electrically insulating and at least one of said ion-conductive layers is electrically conductive.

2. A fuel cell according to claim 1, wherein said membrane comprises an electrically insulating, ion-conductive layer (2B) interposed between a first electrically conductive ion-conductive layer (2A) and a second electrically conductive ion-conductive layer (2C).

3. A fuel cell according to any one of the preceding claims, wherein at least one ion-conductive and electrically conductive layer (2A,2C) comprises an ion-conductive matrix and an electrically conductive filler.

4. A fuel cell according to claim 3, wherein said ion-conductive matrix is a polymer matrix.

5. A fuel cell according to claim 3 or 4, wherein said electrically conductive filler comprises an electrically conductive network of particles within, said ion-conductive matrix.

6. A fuel cell according to any one of the preceding claims, wherein said electrically conductive filler is capable of attaching catalytic substances and/or has catalytic substances attached,

7. A fuel cell according to any one of the preceding claims wherein at least one electrically conductive layers is made up or at least two layers wherein a layer closer to the electrode has a lower concentration of catalytically active material than a layer closer to the electrically insulating layer.

8. A fuel according to any one of the preceding claims wherein the ion-conductive layer at the cathode side of the membrane has a concentration of catalytically active material which is higher than the concentration of catalytically active material in the electrically conductive layer at the anode side of the membrane.

9. A fuel cell according to any one of the preceding claims which is a proton exchange membrane fuel cell.

10. A fuel cell according to any one of the claims 1-8 which is a direct liquid fuel cell.

11. A fuel cell according to any one of the preceding claims wherein the electrically insulating layer contains a non-con-ductive solid filler material.

12. A fuel cell according to any one of the preceding claims wherein the electrically insulating layer is profiled, for example in the form of a regular or irregular wave or saw pattern, or in any other non-flat profile.

13. A fuel cell according to any one of the preceding claims wherein the membrane is produced by a co-extrusion process.

14. A fuel cell stack comprising at least one fuel cell according to any one of the preceding claims.
